Europäisches Patentamt

European Patent Office

Office européen des brevets

(11) Veröffentlichungsnummer: **0 328 960**

**A2**

## EUROPÄISCHE PATENTANMELDUNG

(21) Anmeldenummer: 89101867.3

(22) Anmeldetag: 03.02.89

(51) Int. Cl.⁴: **C08L 25/12 , C08L 51/04 ,**
**//(C08L25/12,51:04,9:02),**
**(C08L51/04,25:12,9:02)**

(30) Priorität: 18.02.88 DE 3805057

(43) Veröffentlichungstag der Anmeldung:
23.08.89 Patentblatt 89/34

(84) Benannte Vertragsstaaten:
**DE ES FR GB IT**

(71) Anmelder: **BAYER AG**

**D-5090 Leverkusen 1 Bayerwerk(DE)**

(72) Erfinder: **Zabrocki, Karl, Dr.**
**Edelfalter 33**
**D-4044 Büttgen(DE)**
Erfinder: **Liedtke, Wolfgang**
**Virchowstrasse 5**
**D-4047 Dormagen(DE)**
Erfinder: **Frohberg, Ekkehard**
**Offenbachstrasse 33**
**D-5000 Köln 71(DE)**
Erfinder: **Richter, Klaus**
**Auf der Kicken 11**
**D-5000 Köln 80(DE)**

(54) **Hochzähe ABS-Formmassen mit matter Oberfläche.**

(57) ABS-Formmassen mit hoher Zähigkeit und vermindertem Oberflächenglanz werden erhalten aus
 A. Copolymerisaten von Styrol, Styrolderivaten, Methylmethacrylat oder Mischungen daraus einerseits und Acrylnitril andererseits,
 B. Pfropfpolymerisaten der unter A genannten Monomeren auf Kautschuken,
 C. Butadien-Acrylnitril-Kautschuken,
durch gemeinsame Koagulation eines Latex von C mit einem Latex von A und/oder B und gegebenenfalls Zumischen der noch fehlenden Bestandteile in fester Form.

EP 0 328 960 A2

EP 0 328 960 A2

## Hochzähe ABS-Formmassen mit matter Oberfläche

Die Erfindung betrifft ABS-Formmassen mit reduziertem Oberflächenglanz nach der Verarbeitung und hoher Zähigkeit. Sie betrifft ebenso ein Verfahren zur Herstellung solcher Formmassen, die beispielsweise als Gehäuseteile für Elektrogeräte und als Blenden, Armaturentafeln und Verkleidungen in Fahrzeugen verwendet werden können.

Es ist bekannt, matte Kunststoffoberflächen zu erzeugen durch Zusatz anorganischer Füllstoffe zur Kunststoff-Masse (vgl. z.B. DOS 2 844 687). Dies führt bei ABS-polymerisaten jedoch zu einem drastischen Rückgang der Zähigkeit, so daß die Formteile für viele Zwecke ungeeignet werden.

Die Mattierung von ABS-Oberflächen wurde auch versucht durch die Verwendung von Pfropfpolymerisaten mit großen Kautschukteilchen und mit Zusatz von Nitrilkautschuk (z.B. US-PS 4 169 869) sowie Verwendung unvernetzter oder nur schwach vernetzter Kautschuke (z.B. DE-OS 2 057 936). Hierbei wird jedoch die erwünschte Mattierung der Oberfläche mit dem Verlust an Zähigkeit, Härte oder Verarbeitbarkeit erkauft.

Gemäß der DE-OS 3 421 353 hat man durch eine ionische Bindung zwischen Pfropfteilchen künstlich große Kautschukaggregate erzeugt und damit matte Oberflächen hergestellt. Dies bedarf jedoch des Einsatzes besonderer, schwer zugänglicher Rohstoffe und einer sehr präzise geführten Umsetzung.

Es wurde nun gefunden, daß man matte ABS-Formmassen mit hohen Zähigkeiten und guter Verarbeitbarkeit herstellen kann, wenn man harzartige Copolymerisate, Pfropfpolymerisate und Butadien-Acrylnitrilkautschuke in Form von Latices mischt und gemeinsam koaguliert. Dabei braucht nur ein Teil der Copolymerisate und/oder Pfropfpolymerisate in Latexform zu sein.

Gegenstand der Erfindung sind somit ABS-Formmassen aus

A. 30 bis 75 Gew.-% (bezogen auf die Summe von A + B + C) Copolymerisat aus Styrol und Acrylnitril im Gewichtsverhältnis 90:10 bis 50:50, worin das Styrol ganz oder teilweise ersetzt werden kann durch $\alpha$-Methylstyrol, Vinyltoluole oder Methylmethacrylat,

B. 20 bis 60 Gew.-% (bezogen auf die Summe von A + B + C) Pfropfpolymerisat der unter A genannten Monomeren auf einen Polybutadien- oder Acrylatkautschuk als Pfropfgrundlage, wobei das Gewichtsverhältnis der Monomeren zu den Pfropfgrundlagen 30:70 bis 75:25 beträgt,

C. 2 bis 15 Gew.-% (bezogen auf die Summe von A + B + C) Copolymerisat aus Butadien und Acrylnitril,

die dadurch gekennzeichnet, sind, daß C. als Latex zusammen mit mindestens einem Teil von A. und/oder B. ebenfalls als Latex gemischt und das Gemisch anschließend koaguliert wird.

Ebenfalls Gegenstand der Erfindung ist ein Verfahren zur Herstellung von ABS-Formmassen, in dem einem Latex von C soviel A und/oder B als Latex zugemischt wird, daß C höchstens 45 Gew.-% des Feststoffgehalts der Mischung ausmacht, die Latexmischung in an sich bekannter Weise koaguliert und der Feststoff isoliert wird und die zum Erreichen der Zusammensetzung (A) 30 bis 75 Gew.-%, (B) 20 bis 60 Gew.-% (C) 2 bis 15 Gew.-% eventuell noch fehlende Menge A und/oder B in fester Form in an sich bekannter Weise zugemischt wird.

Als Komponente A verwendet man Copolymerisate aus Styrol und Acrylnitril im Gewichtsverhältnis 90:10 bis 50:50, in denen das Styrol ganz oder teilweise ersetzt werden kann durch $\alpha$-Methylstyrol, Vinyltoluole oder Methylmethacrylat. Sie können nach üblichen Verfahren wie Massepolymerisation, Emulsionspolymerisation oder Suspensionspolymerisation hergestellt werden, wobei Massepolymerisation bevorzugt ist (vgl. DE-AS 2 420 358 und 2 724 360).

Als Komponente B eignen sich Pfropfpolymerisate, die durch wäßrige Emulsionspolymerisation von den unter A genannten Monomeren, bevorzugt Styrol und Acrylnitril, in Gegenwart von Polybutadien- oder Acrylatkautschuken hergestellt werden. Hierbei beträgt das Gewichtsverhältnis der eingesetzten Monomeren zu den eingesetzten Grundlagen 30:70 bis 75:25. Verfahren zu ihrer Herstellung finden sich z.B. in EP 0 116 330 und DE-AS 2 420 358. Als Pfropfgrundlage benutzt man vorzugsweise Polybutadien-Latices mit mittleren Teilchendurchmessern von 0,08 bis 0,5 $\mu$m, besonders bevorzugt 0,1 bis 0,45 $\mu$m, gemessen als $d_{50}$-Wert der Ultrazentrifugen-Verteilung. Hierbei sind für besonders hochzähe Produkte Pfropfpolymere auf grobteilige Pfropf-Grundlagen, d.h. solche mit >0,35 $\mu$m Durchmesser, erforderlich. Es ist möglich, diese Pfropfpolymerisate mit solchen auf feinteiliger Pfropfgrundlage abzumischen.

Als Komponente C kommen Copolymere aus Butadien und Acrylnitril in Betracht, bei denen der Masseanteil Acrylnitril von 25 bis 35 %, vorzugsweise von 27 bis 31 %, ist und die einen Mooney-Wert zwischen 40 und 80, gemessen bei 100°C, als ML4 besitzen. Die Herstellung solcher Kautschuke erfolgt durch Emulsionspolymerisation sowohl im Kalt- wie im Warmverfahren und ist in Houben-Weyl, Methoden der Organischen Chemie, Bd. 14/2, beschrieben. Besonders gleichmäßige Oberflächen liefern hierbei

2

Nitrilkautschuke mit Mooney-Werten >60.

Wesentlich für den Erhalt matter Oberflächen und gleichzeitig hoher Zähigkeit ist es, die Komponente C erfindungsgemäß gemischt mit einem Latex der Komponenten A und/oder B zu koagulieren. Hierbei sind die Mengen der einzelnen Polymerisate in weiten Grenzen variierbar, jedoch darf der Anteil an Komponente C im Koagulat nicht größer als 45 Gew.-% sein. Bevorzugt liegt er bei 40 Gew.-%. Besonders gut handhabbare Pulver, die auch beim Lagern nicht verbacken, erhält man, wenn der gesamte Kautschuk, d.h. Komponente C plus gegebenenfalls der Kautschukanteil der Komponente B, unterhalb von 25 Gew.-%, insbesondere unterhalb 20 Gew.-%, liegt. Es wird koaguliert, nachdem die latexförmigen Komponenten sorgfältig vermischt wurden. Man kann bereits dieser Mischung übliche für die Verarbeitung oder Anwendung erforderliche Additive wie Stabilisatoren oder Gleitmittel zufügen. Als Fällmittel haben sich verdünnte Säuren und/oder wäßrige Lösungen von Erdalkalisalzen bewährt.

Eine besonders günstige Kombination von Endprodukteigenschaften (Zähigkeit, Wärmeformbeständigkeit, Mattierung der Oberfläche) erreicht man durch den Einsatz eines Cofällungsprodukts der Komponenten B und C in die ABS-Mischung, wobei die Komponente B ein Pfropfpolymerisat von 75-45, vorzugsweise 75-65 Gew.-Teilen eines Styrol-Acrylnitril-Gemisches (Gewichtsverhältnis 72:28 bis 66:34, vorzugsweise 66:34) auf 25-55 Gew.-Teile, vorzugsweise 25-35 Gew.-Teile, eines Polybutadienlatex-oder-Latexgemisches ist und die Komponente C ein Copolymerisat aus 30 Gew.-Teilen Acrylnitril und 70 Gew.-Teilen Butadien ist, welches vernetzt ist und vorzugsweise einen Gelgehalt von 80-95 %, einen Quellindex von 10-20 (gemessen in Methylethylketon) und eine Mooney-Viskosität ML 4$'$ von 70-90 hat.

ABS-Formmassen auf Basis dieser Kombination führen bei Extrusionsverarbeitung zu besonders starkem Mattierungseffekt.

Man kann die erfindungsgemäßen Formmassen direkt durch die Cofällung ihrer latexförmigen Bestandteile herstellen. Es ist aber auch möglich, nur einen Teil der die Formmasse bildenden Bestandteile auf diese Weise zu mischen und den Rest des festen Polymerisats auf Kunststoff-geeigneten Mischaggregaten wie Schnecken, Knetern, Walzen einzumischen. Hierbei werden in die Masse übliche Zuschlagsstoffe wie Farbmittel, Additive, gegebenenfalls zusätzliche Mattierungsmittel wie feinteilige Silikate, eingemischt. Im übrigen sei zur Herstellung der Formmasse auf die EP 0 164 048 hingewiesen.

Beispiele

In den folgenden Beispielen und Vergleichsversuchen sind alle Mengenangaben Gew.-Teile sofern nicht anders vermerkt. Die kunststofftechnischen Prüfdaten wurden wie folgt gemessen:

Kerbschlagzähigkeit ak nach DIN 53 543, Kugeldruckhärte Hc nach DIN 53 546, Wärmeformbeständigkeit nach Vicat B nach DIN 53 460, Schmelzindex MVI bei 220°C, 10 kg nach DIN 53 735, Glanzgrad nach DIN 67 530 auf einem Gerät "multi gloss" der Fa. Byk-Chemie unter einem Winkel von 60°.

Polymerisate

A1: Emulsions-Copolymerisat aus 68 Teilen Styrol und 32 Teilen Acrylnitril, Molgewicht ca. 180.000.

A2: Emulsions-Copolymerisat aus α-Methylstyrol und Acrylnitril gemäß DE-OS 3 431 194.

A3: Masse-Copolymerisat aus 72 Teilen Styrol und 28 Teilen Acrylnitril, MVI-Wert ca. 9 g/10 Minuten.

B1: Emulsions-Pfropfpolymerisat aus 50 Teilen eines Styrol-Acrylnitril-Gemisches (72:28) auf 50 Teilen Polybutadien mit einem mittleren Teilchendurchmesser ($d_{50}$) von 380 nm.

B2: Emulsions-Pfropfpolymerisat aus 50 Teilen eines Styrol-Acrylnitril-Gemisches (72:28) auf 50 Teilen Polybutadien mit einem mittleren Teilchendurchmesser ($d_{50}$) von 100 nm.

B3: Emulsions-Pfropfpolymerisat aus 70 Teilen eines Styrol-Acrylnitril-Gemisches (66:34) auf 30 Teilen Polybutadien mit einem mittleren Teilchendurchmesser ($d_{50}$) von 250 nm.

C1: Emulsions-Copolymerisat aus im wesentlichen 30 Teilen Acrylnitril und 70 Teilen Butdien, Mooney Vikosität ML 4$'$ ca. 75, Gelgehalt 84 %, Quellindex 16.

C2: Emulsions-Copolymerisat aus im wesentlichen 28 Teilen Acrylnitril und 68 Teilen Butadien, Mooney Viskosität ML 4$'$ ca. 45.

Koagulationen

3

Die Latices wurden einzeln bzw. in folgenden Kombinationen nach Aufziehen eines Stabilisiersystems gefällt, indem man sie in eine wäßrige, mit Essigsäure sauer eingestellte Bittersalzlösung unter Rühren bei 80-100° C einträgt:

Fällung F1: 100 % C1
Fällung F2: 100 % C2
Fällung F3: 60 % B3 + 40 % C1
Fällung F4: 52,6 % C1 + 23,7 % B1 + 23,7 % B2
Fällung F5: 40 % C1 + 18 % B1 + 18 % B2 + 24 % A1
Fällung F6: 79 % A2 + 11,2 % B1 + 11,3 % B2
Fällung F7: 40 % C2 + 18 % B1 + 18 % B2 + 24 % A1
Fällung F8: 50 % B1 + 50 % B2

Formmassen

Die Polymeren wurden nach den in Tabelle 1 uns 2 aufgeführten Rezepturen auf einem Innenkneter gemischt. Die Zahlenangaben sind Gewichtsteile, bezogen auf 100 Teile Gesamt-Polymer. Die Mischungen wurden zu Prüfkörpern verspritzt und nach den genannten Vorschriften ausgeprüft. Die Glanzmessung erfolgte an einem gespritzten Plättchen von 4 x 6 cm. Die Tabellen enthalten auch die Prüfergebnisse von erfindungsgemäßen Beispielen und nicht erfindungsgemäßen Vergleichsversuchen.

Tabelle 1

| Beispiele und Vergleichsversuche: Zäher ABS-Typ | | | | | | | | | | | | |
|---|---|---|---|---|---|---|---|---|---|---|---|---|
| Versuch/Beispiel | A3 | F1 | F3 | F4 | F5 | F7 | F8 | $a_k$ | $h_k$ | Vicat | MVI | Glanz |
| Beispiel 1 | 50 | | 50 | | | | | 15,9 | 66 | 97 | 1,4 | 52 |
| Beispiel 2 | 62 | | | 38 | | | | 15,5 | 64 | 96 | 1,3 | 49 |
| Beispiel 3 | 50 | | | | | 50 | | 24,1 | 64 | 90 | 0,6 | 48 |
| Beispiel 4 | 50 | | | | 50 | | | 15,4 | 64 | 96 | 1,1 | 49 |
| Vergleichsversuch a | 62 | 20 | | | | | 18 | 11,8 | 66 | 95 | 2,3 | 54 |
| Rezeptur: | | | | | | | | | | | | |
| Zu 100 Teilen Polymer wurden 2,0 Teile Pentaerythrittetrastearat, 0,5 Teile Mg-Stearat, 0,15 Teile eines Silikonöls, 4,0 Teile eines feinteiligen Silikats und 1,0 Teile Rußpgiment bei der Compoundierung zugesetzt. | | | | | | | | | | | | |

Tabelle 2

| Beispiele und Vergleichsversuche: wärmeformbeständiger ABS-Typ | | | | | | | | | | | | | |
|---|---|---|---|---|---|---|---|---|---|---|---|---|---|
| Versuch/Beispiel | A3 | F1 | F2 | F4 | F5 | F6 | F7 | F8 | $a_k$ | $h_k$ | Vicat | MVI | Glanz |
| Beispiel 4 | 47,8 | | | 24,7 | | 27,5 | | | 16,5 | 86 | 101 | 2,5 | 69 |
| Beispiel 5 | 40,0 | | | | 32,5 | 27,5 | | | 17,8 | 84 | 102 | 3,5 | 70 |
| Beispiel 6 | 40,0 | | | | | 27,5 | 32,5 | | 19,8 | 85 | 99 | 2,0 | 36 |
| Vergleichsversuch b | 47,8 | 13,0 | | | | 27,5 | | 11,7 | 13,3 | 86 | 101 | 0,2 | 65 |
| Vergleichsversuch c | 40 | | 15 | | | 45 | | | 8,5 | 90 | 99 | 0,8 | 45 |
| Rezeptur: | | | | | | | | | | | | | |
| Zu 100 Teilen Polymer wurden 1,0 Teile Pentaerythrittetrastearat, 0,5 Teile Mg-Stearat, 0,15 Teile Silikonöl, 0,5 Teile eines feinteiligen Silikats und 1,0 Teile Rußpgiment bei der Compoundierung zugesetzt. | | | | | | | | | | | | | |

4

**Ansprüche**

1. ABS-Formmassen, aus

A. 30 bis 75 Gew.-% (bezogen auf die Summe von A + B + C) Copolymerisat aus Styrol und Acrylnitril im Gewichtsverhältnis 90:10 bis 50:50, worin das Styrol ganz oder teilweise ersetzat werden kann durch α-Methylstyrol, Vinyltoluole oder Methylmethacrylat,

B.20 bis 60 Gew.-% (bezogen auf die Summe von A + B + C) Pfropfpolymerisat der unter A genannten Monomeren auf einen Polybutadien-oder Acrylatkautschuk als Pfropfgrundlage, wobei das Gewichtsverhältnis der Monomeren zu den Pfropfgrundlagen 30:70 bis 75:25 beträgt,

C. 2 bis 15 Gew.-% (bezogen auf die Summe von A + B + C) Copolymerisat aus Butadien und Acrylnitril dadurch gekennzeichnet, daß C. als Latex zusammen mit mindes ns einem Teil von A. und /oder B. ebenfalls als Latex gemischt und das Late emisch anschließend koaguliert wird.

2. ABS-Formmassen gemäß Anspruch 1, dadurch gekennzeichnet, daß man Cofällprodukte aus B und C einsetzt.

3. ABS-Formmassen gemäß Anspruch 1, dadurch gekennzeichnet, daß B ein Pfropfpolymerisat von 75-45 Gew.-Teilen eines Styrol-Acrylnitril-Gemisches im Gew.-Verhältnis 72:28 bis 66:34 auf 25-55 Gew.-Teile eines Polybutadien-Latex oder -Latexgemisches ist und C ein vernetztes Copolymerisat aus 30 Gew.-Teilen Acrylnitril und 70 Gew.-Teilen Butadien.

4. Verfahren zur Herstellung von Formmassen gemäß Anspruch 1, dadurch gekennzeichnet, daß einem Latex von C soviel A und/oder B als Latex zugemischt wird, daß C höchstens 45 Gew.-% des Feststoffgehalts der Mischung ausmacht, die Latexmischung in an sich bekannter Weise koaguliert und der Feststoff isoliert wird und die zum Erreichen der Zusammensetzung (A) 30 bis 75 Gew.-%, (B) 20 bis 60 Gew.-% (C) 2 bis 15 Gew.-% eventuell noch fehlende Menge A und/oder B in fester Form in an sich bekannter Weise zugemischt wird.

5